# EUROPÄISCHE PATENTSCHRIFT

(11) **EP 2 248 273 B1**
(45) Veröffentlichungstag und Bekanntmachung des Hinweises auf die Patenterteilung: **16.05.2018**
(21) Anmeldenummer: 09715993.3
(22) Anmeldetag: 30.01.2009
(51) Int. Cl.: H04B 1/48

(54) **FRONT-END FÜR RF-SENDE-EMPFANGSANLAGEN MIT IMPLIZIERTER RICHTUNGS-STEUERUNG UND ZEITMULTIPLEX-VERFAHREN IN SUBMIKRON-TECHNOLOGIE**
FRONT END FOR RF TRANSMITTING-RECEIVING SYSTEMS WITH IMPLICIT DIRECTIONAL CONTROL AND TIME-MULTIPLEXING METHOD IN SUBMICRON TECHNOLOGY
FRONTAL POUR DES INSTALLATIONS ÉMETTRICES-RÉCEPTRICES RF À COMMANDE DE SENS IMPLICITE ET MULTIPLEXAGE TEMPOREL EN TECHNOLOGIE SUBMICRONIQUE

(30) Priorität: 29.02.2008 DE 102008000473
(43) Veröffentlichungstag der Anmeldung: 10.11.2010
(73) Patentinhaber: Maxim Integrated GmbH, 8403 Lebring (AT)
(72) Erfinder: AKBARI, Rahim, A-8010 Graz (AT)
(74) Vertreter: Bergmeier, Werner
(86) Internationale Anmeldenummer: PCT/EP2009/051095
(87) Internationale Veröffentlichungsnummer: WO 2009/106403

(56) Entgegenhaltungen:
- KNOPIK V ET AL: "0.18 /spl mu/m thin oxide cmos transceiver front-end with integrated TxRx commutator for low cost bluetooth solutions" EUROPEAN SOLID-STATE CIRCUITS, 2003. ESSCIRC '03. CONFERENCE ON 16-18 SEPT. 2003, PISCATAWAY, NJ, USA,IEEE, 16. September 2003 (2003-09-16), Seiten 675-678, XP010678580 ISBN: 978-0-7803-7995-4 in der Anmeldung erwähnt

## Beschreibung

Die gegenständliche Erfindung betrifft Radio-Frequenz (RF) Sende- und Empfangseinrichtungen, die kurz als RF-Sende-Empfänger oder RF-Transceiver bezeichnet werden. Dabei handelt es sich um Antennen-Ein-Ausgangs-Schaltungen (Front-Ends) von RF-Verstärkern, welche zusammen mit anderen Baugruppen auf einzelnen integrierten Schaltungen ausgebildet werden.

### STAND DER TECHNIK

Die meisten der verwendeten Strukturen verwenden bereits bekannte Technologien. Bekannt sind beispielsweise symmetrische Breitband-Verstärker für Leistungsverstärker von Sende-Endstufen (PA) und differentielle rauscharme Eingangsverstärker (Low-Noise-Amplifier LNA) unter Verwendung von Transistoren in Kaskode-Anordnung mit Kaskode-Transistor in Basis- oder Gate-Schaltung (Common-Gate). Auch die Verwendung von Feldeffekt-Transistoren in Komplementärer Metall Oxid Halbleiter Technologie (CMOS) für Schalter ist an sich nichts Neues. Besonders n-Typ und p-Typ-Metall-Oxid-Halbleiter-Feld-Effekt-Transistoren (NMOS-FET und PMOS-FET) werden häufig für Durchgangsschalter oder Analogschalter verwendet. Die meisten dieser Grund-Schaltungen finden sich in "Halbleiter-Schaltungstechnik" von Tietze und Schenk, veröffentlicht im Springer-Verlag oder in "CMOS Analog Circuit Design" von Allen und Holberg, veröffentlicht durch Oxford University Press.

Der erfinderische Schritt basiert hier jedoch auf dem Prinzip des impliziten Ausnutzens von Sperrwirkungen der Übertragungs-Funktion der für die Verstärkung maßgeblichen Transistoren, durch das Manipulieren der Arbeitspunkt-Vorspannung an deren Gate- und Bulk-Anschlüssen.

Ein typischer RF-Sende-Empfänger wird im "Radio-Communication-Apparatus" der Veröffentlichung EP 1 176 709 A2 offenbart. Dieser zeigt, ein typisches Front-End gegenwärtiger Schaltungen. Nachteilig ist dabei, dass ein zusätzlicher Schalter zum Umschalten der Übertragungsrichtung von und zur Antenne erforderlich ist.

Die meisten Sende-Empfänger weisen bevorzugt Common-Source-Konfigurationen (Source-Schaltungen) anstelle von Common-Gate-Konfigurationen für den Transistor im LNA-Teil auf, dazu gehören insbesondere Widerstandsangepasste LNAs oder rückgekoppelte LNAs sowie induktiv-degenerierte LNAs.

Ein Ultra-Breitband-CMOS-Sende-Empfänger mit Common-Gate-Eingangsstufe aus NMOS-Bauteilen wurde im IEEE Journal of Solid-State Circuits Vol.40 im Dezember 2005 vorgestellt. Diese Schaltung erlaubt ebenfalls die direkte (implizite) Nutzung derselben Antenne für Sender und Empfänger. Ein 0,18 µm Dünn-Oxid-CMOS-Sende-Empfänger-Front-End mit integriertem TX/RX-Kommutator für kostengünstige Bluetooth-Lösungen wurde 2003 in einem ESSCIRC Poster 24 von Vincent Knopik und Didier Belot von STMicroelectronics veröffentlicht. (KNOPIK V ET AL: "0.18 /spl mu/m thin oxide cmos transceiver front-end with integrated TxRx commutator for low cost bluetooth solutions",EUROPEAN SOLID-STATE CIRCUITS, 2003. ESSCIRC '03. CONFERENCE ON 16-18 SEPT. 2003, PISCATAWAY, NJ, USA,IEEE, 16. September 2003 (2003-09-16), Seiten 675-678) Das darin vorgestellte Front-End benutzt keinen Antennen-Schalter. Die Grundidee dabei ist das Deaktivieren (Abschalten) der jeweils nicht aktiven Komponente (entweder PA oder der LNA). Diese Lösung benutzt nur einen Antennen-Anschluss, welcher sowohl als Eingang von der Antenne als auch als Ausgang zur Antenne dient. Die LNA Impedanz wird der Antenne angepasst, und die Impedanz des PA Ausganges wird für den LNA optimiert. Der LNA verwendet Common-Gate-Topologie mit NMOS-Elementen.

### AUFGABE DER ERFINDUNG

Basierend auf diese, in der oben genannten Literatur zitierte bestehende Technologie, wurde ein integrierter Schaltkreis entwickelt, der preisgünstige Integration von Radio-Frequenz (RF) - Sende-Empfängern insbesondere für Quad-Band-ISM-Anwendungen ermöglicht. Zur Kostenersparnis soll die Anzahl von Antennen und die Anzahl der passiven Abstimm-Elemente (Induktanz, Kapazität und Widerstand) minimiert werden. Gleichzeitig soll die erforderliche Silizium-Fläche minimiert werden.

Da die Ziel-Anwendungen Zeitduplex-Verfahren betreffen, erlaubt die Art der Kommunikation die Verwendung von nur einer Antenne. Externe oder interne zusätzliche Schalter zum Umschalten von Sende- und Empfangsrichtung (TX-RX Schalter) sollten vermieden werden. Eine primäre Aufgabe der Erfindung ist insbesondere die Vermeidung von analogen Hochfrequenz-Signal-Schaltern zwischen dem RF-Anschluss und der Antenne. Eine weitere Aufgabe ist darin zu sehen, dass die Zahl der Abstimm-Elemente möglichst klein ist, wobei diese Elemente für beide Kommunikations-Richtungen dieselben sein sollen. Dadurch sollen nur eine Konfiguration und eine Anpassung (Abstimmung) sowohl für den Sendekreis als auch für den Empfangskreis erforderlich sein. Es versteht sich, dass die Verstärker des RF-Front-Ends, umfassend eine Empfangseingangsstufe und eine Sendeausgangsstufe, die erforderliche Signal-Qualität, das notwendige Signal-Geräusch-Verhältnis und die erforderliche Signal-Dämpfung der nicht-aktiven Richtung aufweisen sollen. Neben NMOS-Transistoren sollen PMOS-Feld-Effekt-Transistoren in Common-Gate-Konfiguration eingesetzt werden, um die Anzahl kostenintensiver Bauteile gegenüber herkömmlicher Schaltungen stark zu reduzieren.

### ZUSAMMENFASSUNG DER ERFINDUNG

Der Gegenstand der Erfindung ist in den Ansprüchen definiert. Die Aufgabe der Erfindung wird entsprechend den Merkmalen in den Ansprüchen gelöst. Für beide RF-Kommunikations-Richtungen sind nur eine Antenne und dieselben Abstimmelemente mithilfe der implizierten Richtungssteuerung erforderlich. Die Antenne mit den Abstimmelementen wird an die RF-Ein-Ausgangsstufe eines solchermaßen ausgestatteten drahtlosen RF-Sende-Empfänger angeschlossen. Grundvoraussetzung ist die Verwendung eines Zeit-Multiplex-Verfahrens. Diese Ein-Ausgangsstufe findet vorzugsweise in Sende-Empfänger mit Zeitmultiplexverfahren (Time Division Multiple Access = TDMA) Verwendung. Eine bevorzugte Ziel-Anwendung sind integrierte Quad-Band ISM Sende-Empfänger-Bausteine. Bevorzugte Technologien sind Submikron-Technologien mit 0,18 µm CMOS (Komplementäre Metall-Oxid-Halbleiter) oder BiCMOS-(gemischt Bipolar/CMOS)-Prozesse gleicher Strukturgröße. Die Ein-Ausgangsstufe des Sende-Empfängers besteht aus zwei Blöcken, die auf dem selben integrierten Schaltkreis ausgeführt sind.

Der erste Block der Schaltung zeigt eine Ausgangsstufe eines Leistungs-Verstärkers (PA), die eine Transistor-Kaskode-Schaltung in Open-Drain-Konfiguration für die letzte Stufe der Signal-Verstärkung benutzt, um eine extern anschließbare RF-Antenne anzusteuern. Vorteilhaft ist, dass der Kaskode-Transistor während der Sendeperiode (TX) als Common-Gate-Transistor mit konstanter Arbeitspunkt-Vorspannung dient. Durch geeignete SteuerMittel wird das Gate-Potential des Kaskode-Transistors derart verändert, dass der TX-Pfad während der Empfangsperiode (RX) von der Antenne hochohmig isoliert wird.

Der zweite Block ist ein rauscharmer Verstärker (Low Noise Amplifier, LNA). Seine Eingangsstufe wird vorteilhaft durch einen p-Kanal Metall Oxid Halbleiter Feld Effekt Transistor (PMOS-FET) in Common-Gate-Konfiguration gebildet. Dieser wird implizit dazu genutzt, um den RX-Teil des Sende-Empfängers von der Antenne abzukoppeln. Dazu wird bevorzugt ein (selbst sperrender) Anreicherungstyp eines PMOS-FET benutzt. Die elektrische Isolation wird am Bulk-Anschluss durch Mittel für das Verändern des Bulk-Potentials vom Niveau des Source-Potentials im RX Betrieb zu einem Niveau über dem Source-Potential unterstützt.

Zum Erzeugen eines Empfangssignal-Spannungsabfalls wird der Drain-Kontakt des PMOS-FET der Eingangsstufe des LNA elektrisch mit einer ohmschen Last verbunden. Eine zweite Verstärker-Stufe vergrößert den Signal-Gewinn des Empfangs-Signals, welcher für gewöhnlich die Eingangs-Mischerstufe folgt. Am Gate-Anschluss des PMOS-FET wird eine niedrige Arbeitspunkts-Vorspannung (low bias) während der RX Perioden des Sende-Empfängers angelegt. Durch das Ändern der Gate-Spannung hin zu Werten in Höhe der positiven Versorgungs-Spannung der Schaltung wird das Antennen-Signal von der Eingangsstufe getrennt. Dies verhindert einen Empfang, insbesondere während der Sendezyklen. Für Prüf-Zwecke kann es erforderlich sein, den RX Pfad zu öffnen, um das Ansteuer-Signal der Ausgangsverstärkerstufe zurück zu lesen. In diesem Fall sollte der Gate-Anschluss durch Änderung der Arbeitspunkt-Spannung derart geregelt werden, dass eine ausreichende Dämpfung für das Ausgangssignal für tiefere Verstärkerstufen am rauscharmen Verstärker erfolgt. Neben den Modi für Senden, Empfangen und Prüfen könnte ein vierter Modus (Leerlauf) dadurch erzielt werden, dass die Antenne hochohmig vom Sende-Empfänger mithilfe dessen äußerster aktiven Elemente abgekoppelt wird.

Als ein Aspekt der gegenwärtigen Erfindung und abhängig vom verfügbaren Halbleiter-Prozess, kann der Haupttransistor der Kaskode-Schaltung der Ausgangsstufe des PA entweder ein bipolarer npn-Transistor oder ein n-Kanal Metall Oxid Halbleiter Feld Effekt Transistor (NMOS-FET) sein. Bei einem NMOS-FET wird ein Anreicherungstyp bevorzugt. Der Basisanschluss beziehungsweise der Gate-Anschluss dieses angesteuerten Ausgangsstufen-Transistors wird elektrisch mit dem Ausgang eines Vorverstärkers verbunden.

Ein weiterer Aspekt dieser Erfindung ist dadurch gegeben, dass ein Potential an das Gate des Kaskode-Transistors des Leistungsverstärkers angelegt wird, dessen Niveau die Drain-Spannung dieses Transistors übertrifft. Dies erlaubt, den Spannungs-Verlust am Kaskode-Transistor aufgrund seiner Schwellen-Spannung während des Sendens zu verringern.

Vorzugsweise wird eine Ladungs-Pumpe zur Erzeugung der zusätzlichen Spannung neben der positiven Versorgungs-Spannung V_{DD} und der negativen Versorgungs-Spannung V_{SS} verwendet. Diese zusätzliche Spannung sollte zumindest um die Schaltschwelle des Transistors höher als V_{DD} sein.

Einem weiteren Aspekt dieser Erfindung zufolge, wird ein Open-Drain-Anschluss der Ausgangsstufe des PA und ein Open-Source-Anschluss der Eingangsstufe des LNA elektrisch verbunden und zum selben äußeren Schaltungsanschluss geführt oder diese Transistoranschlüsse werden an denselben Schaltungsanschluss geführt und durch diesen verbunden. Dieser Schaltungsanschluss ist der Antennen-Anschluss.

Die Abstimmelemente sind außerhalb an den Antennenanschluss angeschlossen und mit der positiven Versorgungs-Spannung V_{DD} verbunden. Diese Spannung treibt den Strom entweder über den Open-Drain-Anschluss der Leistungsverstärker-Stufe (PA) oder über den Open-Source Anschluss der Eingangsstufe des rauscharmen Verstärkers (LNA).

Wenn der Open-Drain-Anschluss der Leistungsverstärker-Ausgangsstufe und der Open-Source-Anschluss der Eingangsstufe des rauscharmen Verstärkers LNA nicht mit dem selben Schaltungsanschluss verbunden sind, ist es vorteilhaft, dass diese Anschlüsse dieselbe Antenne zumindest annähernd im selben Punkt elektrisch kontaktieren.

Einem weiteren Aspekt der Erfindung zufolge, verwendet ein Open-Drain-Anschluss der Ausgangsstufe des Leistungsverstärkers und ein Open-Source-Anschluss der Eingangsstufe des rauscharmen Verstärkers dieselben zusätzlichen Abstimm-Elemente. Dadurch wird der Abstimm- oder Anpassungsaufwand für die Antenne verringert. Das wesentliche Abstimmungsbauteil kann durch eine externe einstellbare Spule gebildet sein. Diese ist Abstimmkomponente sowohl für den Sendeteil als auch für den Empfangsteil.

Ein weiterer wichtiger Aspekt ist, dass alle Verstärkerstufen des Ausgangsleistungs-verstärkers und des Eingangsverstärkers symmetrisch differentiell ausgebildet sind.

Daraus resultieren eine differentielle Ausgangsschnittstelle und eine differentielle Eingangsschnittstelle mit je zwei Anschlüssen. Diese differentiellen Eingangs- und Ausgangs-Anschlüsse verwenden in vorteilhafter Weise dasselbe differentielle Ein/Ausgangs-Schaltungsanschlusspaar, oder werden zumindest elektrisch mit derselben Differantial-Antenne verbunden. Die Schaltungskontakte für die Antenne können über geeignete Anschlüsse mit einer Rahmenantenne verbunden werden. Diese Antenne ist die einzige und dient für die Empfangszyklen und für die Sendezyklen entweder als Empfangs- oder als Sendeantenne.

Als ein weiterer Aspekt der Erfindung könnten die differentiellen Ausgänge der Leistungsverstärker-Ausgangstufe und die differentiellen Eingänge der Eingangsstufe des rauscharmen Verstärkers elektrisch mit denselben zusätzlichen Abstimm-Elementen verbunden sein, insbesondere mit mindestens einer Abstimm-Spule.

Die Innovation wird anhand folgender Ausführungsbeispiele detailliert beschrieben. Es zeigen:
- **Fig. 1**: ein Block-Diagramm von einem Ausführungs-Beispiel einer RF-Sende-Empfänger-Schaltung, mit dem erfindungsgemäßen Front-End,
- **Fig. 2**: ein Detail 321 aus Fig. 1 mit dem kleinen Unterschied, dass die Verbindung zu Punkt 301 außerhalb der Schaltung 1 hergestellt wird.
- **Fig. 3**: zeigt eine typische Prior-Art-Konfiguration mit der Verwendung von RF-TX/RX-Schaltern.
- **Fig. 4**: ist eine ausführlichere Darstellung des erfindungsgemäßen RF-Sende-Empfänger-Front- Ends 1, entsprechend dem Detail 321 aus dem Block-Diagramm Fig. 1, und verdeutlicht anhand der Schaltbilder die bevorzugten Ausführungen des Leistungs-Verstärkers (PA) 100 und des rauscharmen Verstärkers (LNA) 200 in nicht differentieller Ausführung.
- **Fig. 5**: zeigt die bevorzugte differentielle Lösung des RF-Sende-Empfänger-Front-Ends 1.
- **Fig. 6**: ist eine weitere Ausführung ähnlich zu Fig. 4, jedoch mit einem Bipolar-Transistor anstelle des (NMOS-FET) Haupttransistors des PA.
- **Fig. 7**: zeigt das Schaltbild in differentieller Ausführung gemäß Fig. 6. Hier sind zwei Abstimmspulen mit der Antenne angeschlossen.

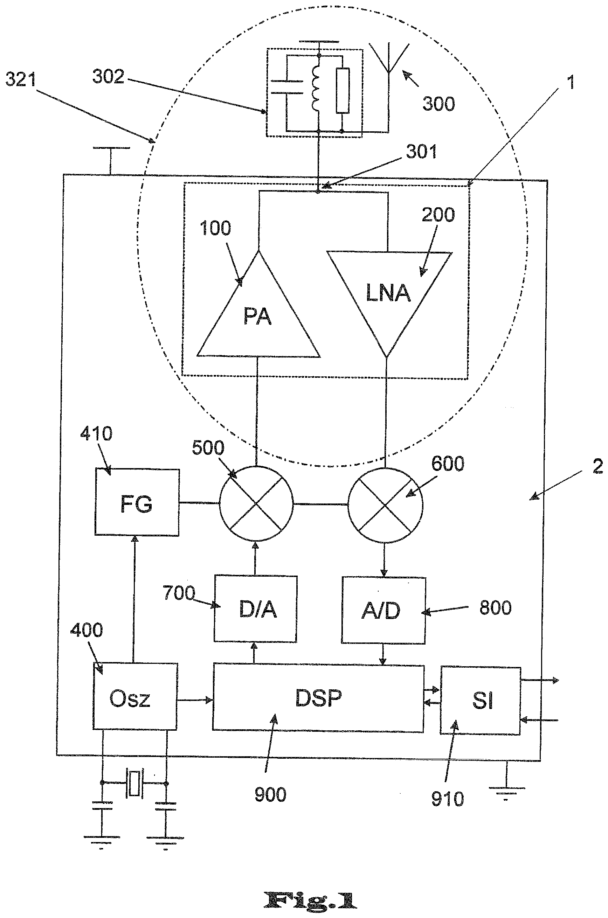

Ein typischer integrierter RF-Sende-Empfänger moduliert das Basisband in höhere Kanäle zur Radiowellen-Übermittlung und demoduliert die Radio-Signale in das Basisband. Das Block-Diagramm in Fig. 1 zeigt einen QuarzOszillator 400 als Referenz-Frequenz-Geber und einen Frequenz-Generator 410. Der Frequenz-Generator kann ein Spannungsgesteuerter Oszillator mit einer PLL (phase locked loop) (einem Phasenregelkreis) sein. Dieser Generator erlaubt das Einstellen der mischenden Frequenz für den Mixer 500, oder die Synthese der Sende-Frequenz und deren Modulation. Das (gefilterte) RF-Ausgangs-Signal muss vom PA 100 verstärkt werden. Der Ausgang des PAs wird normalerweise mit der abstrahlenden Antenne verbunden. Die Abstimm-Elemente werden für die Anforderungen für beste Übermittlung eingestellt.

Um ein ausreichendes RF-Signal von der Empfangs-Antenne am Eingang einer Mischerstufe 600 zu erhalten, ist ein Front-End-Verstärker im RX-Pfad erforderlich. Dieses RF-Signal wird infolge in das Basisband gemischt. Ein Digital-Analogwandler (D/A) 700 und ein Analog-Digitalwandler (A/D) 800 zeigen im Beispiel den Übergang vom Digitalen Basis-Band-Bereich in den analogen Signal-Bereich. Über einen Prozessor (DSP) 900 wird die Digitale Signal Verarbeitung durchgeführt, um die Daten aus dem digitalen Protokollformat und in das erforderliche digitale Format zu bringen. Eine Serielle Schnittstelle (Sl) 910 kann der Kommunikation mit anderen integrierten Schaltkreisen, wie beispielsweise Mikrokontrollern dienen.

Das Anwendungsgebiet der Erfindung ist breit. Alle Arten von RF-Kommunikations-Protokollen die im Zeitmultiplexverfahren arbeiten, können die vorgeschlagene Front-End-Struktur verwenden, wie beispielsweise Bluetooth-Sende-Empfänger oder Nahbereichsradionetze (WLAN=Wireless Local Area Network). Ein Quad-Band ISM Sende-Empfänger ist eine bevorzugte Anwendung der Erfindung.

Die Erfindung ist im Wesentlichen in Block 321 in Fig. 1 enthalten. Das Aussehen der übrigen Teile der integrierten Schaltung ist mannigfaltig. Der Block 1 des gezeigten integrierten Schaltkreises 2 ist das Sende-Empfänger Front-End. Dieser Block ist der äußerste Teil der Schaltung zur Antenne 300. Es gibt nur einen einzigen (vorteilhaft: einen differentiellen) Anschluss im Punkt 301 der Antenne zum integrierte Schaltkreis. Über diesen Punkt wird die RF-Sendeleistung an den Antennen-Widerstand angepasst eingekoppelt. Die typische Versorgungs-Spannung dieser Schaltung ist 1,8 Volt. Das ist ein für den Halbleiter-Prozess typischer Wert für 0,18 µm CMOS- oder BiCMOS-Technologien. Zur Versorgung der Eingangsstufe des Empfängers und der Ausgangsstufe des Senders wird dieser Punkt mit dem Versorgungs-Spannungs-Potential V_{DD} verbunden (hier 1,8 Volt). Passive Abstimm-Bauelemente 302 sind vorhergesehen, um den Antennenkreis anzupassen und die erforderliche RF-Bandbreite vorzufiltern. Die Eingangsstufe des Front-Ends ist ein Teil des rauscharmen Verstärkers LNA 200 und die Ausgangsstufe ein Teil des Leistungs-Verstärkers PA 100.

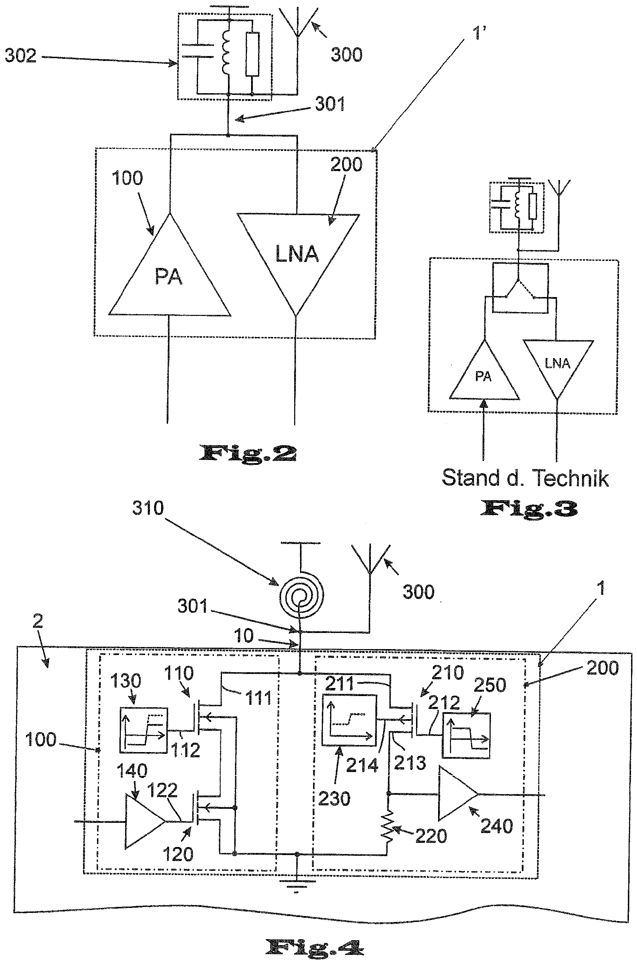

Fig. 2 zeigt das RF-Sende-Empfänger Front-End entsprechend der vorgestellten Erfindung. Es ist nicht notwendig, den Ausgang des PA und den Eingang des LNA innerhalb der integrierten Schaltung fix zu verdrahten. Insbesondere für Prüf-Zwecke könnte es in einigen Fällen vorteilhaft sein, beide Verbindungen zu getrennten Schaltungsanschlüssen zu führen, wo diese dann kurzgeschlossen werden können. Dies ist durch den Unterschied von Fig. 1 Block 1 zu Fig. 2. Block 1' anhand der Blockgrenze angedeutet.

Aufgrund der Tatsache, dass die meisten Prior-Art-Designs besondere, RFgeeignete TX/RX Schalter erfordern, die rauscharm sind und niedrigen Leistungsverlust aufweisen, und nicht kostengünstig herstellbar sind, stellt die präsentierte Erfindung eine gute Alternative dar. Gegenüber existierenden Schalterlosen Sende-Empfänger-Designs wird als Vorteil der stark reduzierte Bedarf an Bauelementen genannt.

Fig. 3 zeigt eine typische Anordnung einer Zeitduplex RF-Front-End-Schaltung gemäß dem Stand der Technik. In vielen Fällen sind die Schalter außerhalb des integrierten Schaltkreises vorgesehen.

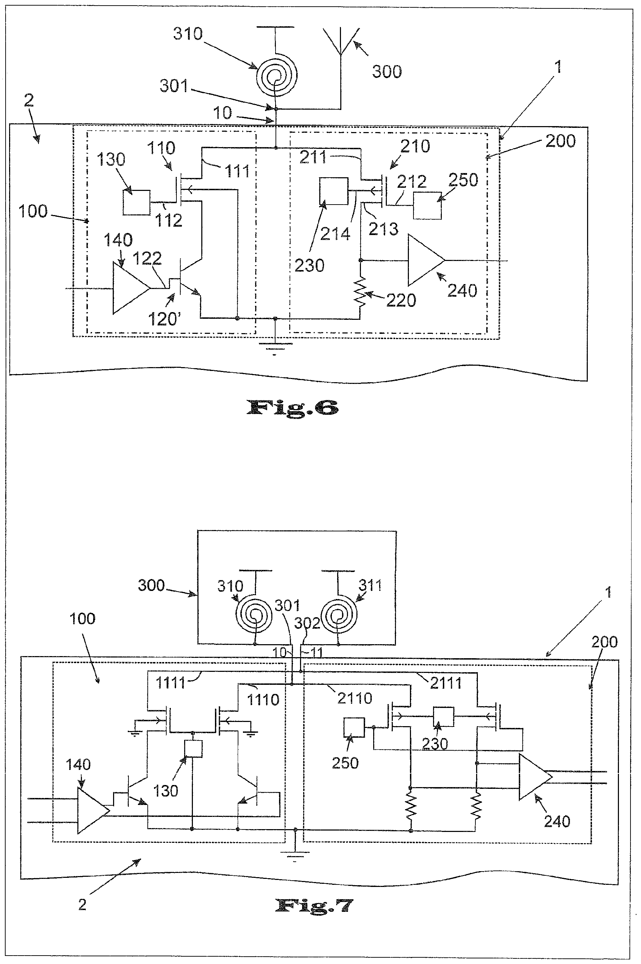

Die Ausgangsstufe des Leistungsverstärkers des PA 100 enthält einen Kaskode-Schaltkreis in einer Open-Drain-Konfiguration. In Fig. 4 ist der verstärkende Transistor 120 ein NMOS-FET (Anreicherungstyp, selbst sperrend). Dessen Gate-Anschluss wird über einen Vorverstärkers 140 angesteuert. Fig. 6 zeigt einen alternativen Bipolar-Transistor 120 ', der in einer BiCMOS Prozess Technologie ausgeführt werden kann. Der Kaskode-Transistor 110 in diesen Konfigurationen ist ein NMOS-FET in Common-Gate-Konfiguration, solange der PA aktiv ist. Dazu wird das Gate dieses Transistors beispielsweise während der Sendephase an V_{DD} gelegt. Das Gate 112 von diesem FET 110 wird aber auch gesteuert, um eine hochohmige Trennung des Sendeteiles von der Antenne 300 und Abstimmelementen zu erreichen. Wie in Fig. 4 durch Block 130 angedeutet, geschieht dies durch Ändern des Gate-Potentials auf V_{SS} oder Ground-Potential. In einem 0,18 µm Prozess wird eine typische Spannung von 1,8V während der Übertragung am Gate und über die Abstimmelemente an den Open-Drain-Anschluss des Kaskode-Transistors angelegt. Das Verwenden einer Spannung oberhalb von V_{DD} am Gate-Anschluss minimiert den Schwellspannungs-Abfall beim Kaskode-Transistor während des Sendens. Diese Spannung kann in der integrierten Schaltung zum Beispiel mit Hilfe einer Ladungs-Pumpe erzeugt werden. Dann beeinflusst der Arbeitspunkt am Gateanschluss nicht die Steilheit des HauptTransistors 120 oder 120 '. Der resultierende Verstärkungsfaktor hängt von der ohmschen Last ab, die am offenen Drain-Antenne-Anschluss angeschlossen wird.

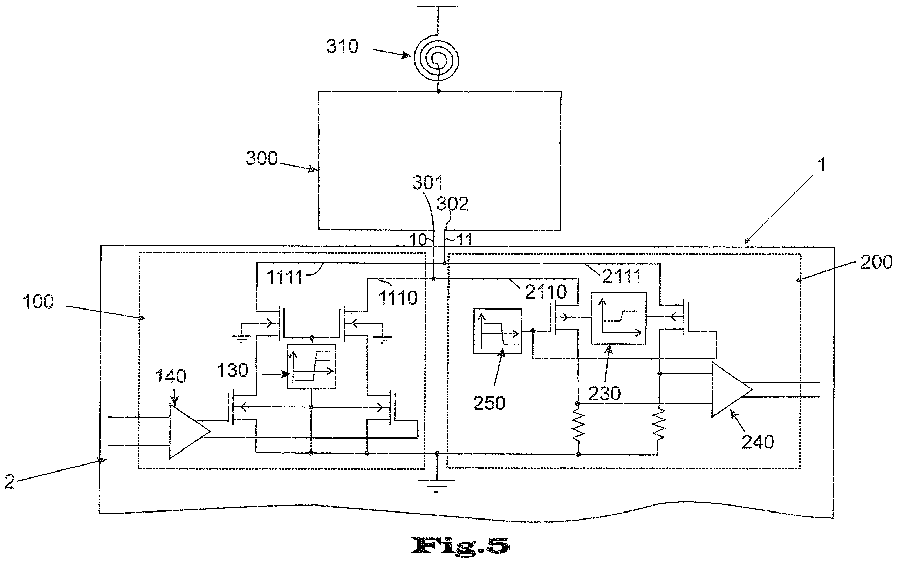

Ein bevorzugtes Ausführungsbeispiel ist eine differentielle Leistungsverstärkerstufe. In diesem Fall zeigen die Signalzweige in Fig. 4 und Fig. 6, nur die Hälfte des verwirklichten Designs. Die Abbildungen, Fig. 5 und Fig. 7 zeigen die ausführlicheren Schaltbilder der typischen Front-End Schaltungen. In der Folge ist der Vor-Verstärker 140 differentiell ausgeführt, hat somit einen differentiellen Eingang für die Ausgänge tieferer Strukturen (des HF-Synthesizers, Modulators oder Mischers). Jeder Kontakt des differentiellen Ausgangs des Vor-Verstärkers wird mit einem Gateanschluss oder einem BasisAnschluss von je einem Haupt-Transistor verbunden (NMOS-FET (Fig. 5) oder BJT (Fig. 7)). Diese beiden Transistoren bilden zusammen mit dem Kaskode-NMOS-FETs einen Differential-Verstärker in Kaskode-Schaltung.

Das Steuer-Signal kann für beide Gate-Anschlüsse der Kaskode NMOS-FETs dasselbe sein. Dieses stammt aus einem Steuerblock des Digitalteiles und sperrt oder gestattet den Sendesignal-Fluss zur Antenne. Über die Gateanschlüsse des differentiellen Verstärkers wird durch Masse- oder V_{SS}-Signalpegel der Signalpfad ausgeschaltet. Im Sendemodus werden die Gates mit V_{DD} oder einem höheren künstlichem Steuerpegel V_{DD++} beaufschlagt. Die Open-Drain-Ausgänge des differentiellen Verstärkers werden mit den Abstimm-Elementen und der Antenne verbunden. Diese Antenne ist in den Beispielen von Fig. 5 und Fig. 7 als Rahmen-Antenne 300 ausgebildet. In Fig. 7 ist das wesentliche Abstimmelement eine Spule für jeden einzelnen Ausgang des differentiellen Anschlusses. Diese stellen eine bestimmte Induktivität dar, die mit V_{DD} verbunden ist. V_{DD} ist somit auch Versorgungs-Spannung der Ausgangsstufe. Anstelle von zwei Spulen kann auch nur eine Spule als Abstimmelement mit V_{DD} und dem differentiellen Ausgang verbunden sein. Dies wird in Fig. 5 demonstriert.

Eine nähere Betrachtung des LNA-Blocks aus Fig. 2 wird in nicht differentieller Ausführung in Fig. 4 oder Fig. 6 als Schaltbild 200 näher offenbart. Die erste Stufe des rauscharmen Antennensignal-Verstärkers wird durch eine Common-Gate-Struktur mit ohmscher Last 220 am Drainanschluss 213 gebildet. Der Ausgang eines PMOS-FET 210 (Anreicherungstyp, selbst sperrend) als Verstärker wird mit einer zweiten Verstärkerstufe 240 verbunden. Das Verhalten des PMOS-FET 210 wechselt von "aktiv" zu "abgeschaltet" durch das Verändern der Arbeitspunkts-Vorspannungen am Bulk-Kontakt 214 und am Gate-Kontakt 212 des Transistors 210 durch die Steuersignale aus den Blöcken 230 und 250. Der Block 230 der das Bulk-Potential steuert liefert entweder ein Signal, welches der Versorgungs-Spannung V_{DD} entspricht (Empfang ist aktiv) oder ein Signal das höher als die Versorgungs-Spannung ist (V_{DD++}) im Modus Senden aktiv - kein Empfang. Die zusätzlich erforderliche Signalspannung kann innerhalb der Schaltung generiert werden. Sie kann auch von derselben Signalquelle stammen, die das erhöhte Signal für das Sendetransistor-Gate 112 im Sendemodus liefert. Durch ein erhöhtes Bulk-Potential wird der Einfluss des PMOS-FET 210 auf den Sendepfad minimiert.

Der Steuerblock 250 für das Gate dieses PMOS-FETs liefert die Arbeitspunkts-Vorspannung im Empfangsmodus der Common-Gate-konfigurierten Schaltung. Zum Abschalten wird das Gate-Potential auf Masse gebracht um die Source-Drain-Verbindung zu trennen.

Wie der PA 100 sollte auch der LNA 200 symmetrisch differentiell ausgeführt sein, wie in Fig. 5 und Fig. 7 gezeigt. In diesem Fall ist die zweite Verstärkerstufe ebenfalls differentiell und ist mit den differentiellen Ausgängen der PMOS-FETs verbunden. Die Blöcke 230 und 250 für das Bereitstellen des Arbeitspunktes oder der Spannung zur Sperrung des RX-Pfades sind dabei am einfachsten mit beiden PMOS-FETs verbunden.

Dieses Konzept erlaubt es, den TX-Ausgang oder differentiellen TX-Anschluss des Leistungs-Antennen-Ausgangsverstärkers PA mit dem RX-Eingang oder differentiellem RX-Anschluss des rauscharmen Verstärkers ohne irgendeinen analogen Schalter intern oder extern für dieselbe Antenne und dieselben Antennen-Abstimmelemente zu teilen. Der Drainanschluss 111 des NMOS-FET 110 kann mit dem Source-Anschluss 211 des PMOS-FET 210 direkt verbunden werden, wobei die sehr geringe Auswirkung auf die Abstimm-Konfiguration durch die Abstimmelemente erfasst und kompensiert werden (Fig. 4, Fig. 6). In differentieller Ausführung werden die Drain-Anschlüsse 1110, 1111 direkt mit den Source-Anschlüssen 2110, 2111 verbunden.

Die gezeigten Ausführungsbeispiele stellen nur eine Repräsentation des geschützten Prinzips dar, andere Abstimmelement oder unterschiedliche Einbettungen des Front-Ends in weitere integrierte Schaltungen sind auch Teil dieser Erfindung, sofern die Ansprüche betroffen sind.

## Patentansprüche

1. Front-End (1) für RF-Sende-Empfangsanlagen mit implizierter Richtungs-Steuerung für Zeitmultiplexverfahren vorzugsweise für Quadband-ISM-Sende-Empfänger in Submikron-Technologie, insbesondere in 0,18-µm-CMOS- oder BiCMOS-Technologie, wobei die Schaltung (1) in einem einzelnen integrierten Schaltkreis (2)
a. eine Ausgangsstufe eines Leistungs-Verstärkers, PA, (100) aufweist, die eine Transistor-Kaskode-Schaltung (110, 120 oder 120') umfasst, die einen Kaskode-Transistor (110) beinhaltet, wobei der Kaskode-Transistor (110) in Open-Drain-Konfiguration als Common-Gate-Transistor fungiert, dessen Gate (112) über Mittel (130) gesteuert wird, die auch Teil der Ausgangsstufe des Leistungs-Verstärkers (100) sind, und die das Gate-Potential ändern, um das Senden über den Open-Drain-Anschluss (111; 1110, 1111) zu blockieren oder zu ermöglichen,
und
b. eine Eingangsstufe eines rauscharmen Verstärkers, LNA, (200) aufweist, die einen p-Kanal-Metall-Oxid-Halbleiter-FeldeffektTransistor, PMOS-FET, (210) beinhaltet, vorzugsweise einen Anreicherungs-Transistor in Common-Gate-Konfiguration ,Gate-Schaltung, und
Mittel (230) zur Steuerung des Bulk-Anschlusses (214) des PMOS-FET (210) beinhaltet, die geeignet sind, das Bulk-Potential vom Niveau des Source-Potentials zu einem Niveau oberhalb des Source-Potentials des PMOS-FET (210) zu ändern, um den Empfang über den Open-Source-Anschluss (211; 2110, 2111) zu sperren, wobei
die Mittel (230) geeignet sind, im Empfangsmodus ein Signal zum besagten Bulk-Anschluss (214) zu liefern, welches der positiven Versorgungs-Spannung (VDD) der Schaltung (1) entspricht, oder im Sendemodus ein Signal zum besagten Bulk-Anschluss (214) zu liefern, das höher als die positive Versorgungs-Spannung (VDD++) der Schaltung (1) ist.

2. Vorrichtung nach Anspruch 1, **dadurch gekennzeichnet, dass** der Drain-Kontakt (213) des PMOS-FET (210) der Eingangsstufe des rauscharmen Verstärkers, LNA, (200) elektrisch mit einer ohmschen Last (220) und mit dem Eingang einer zweiten Verstärker-Stufe (240) verbunden ist, und der Gate-Kontakt (212) des PMOS-FET (210) an ein Arbeitspunkt-Potential geschaltet wird, um einen Empfang zu ermöglichen, oder das Gate (212) wird mit der positiven Versorgungsspannung beaufschlagt, um das Antennensignal abzusperren.

3. Vorrichtung nach Anspruch 1 oder 2, **dadurch gekennzeichnet, dass** der Haupttransistor (120 oder 120') der Kaskode-Schaltung der Leistungsverstärker-Ausgangsstufe (100) ein n-Kanal-Metall-Oxid-Halbleiter-Feldeffekt-Transitor, NMOS-FET, insbesondere ein Anreicherungstyp ist, oder ein Bipolar-Halbleiterübergangs-npn-Transistor ist, und dass der Gate-Anschluss beziehungsweise der Basisanschluss des Transistors (120 oder 120') elektrisch mit dem Ausgang (122) eines Vorverstärkers (140) verbunden ist.

4. Vorrichtung nach einem der Ansprüche 1 bis 3, **dadurch gekennzeichnet, dass** die Mittel (130) für das Verändern des Gate-Potentials des Kaskode-Transistors (110) ein Spannungsniveau verursachen, welches höher als das Drain-Potential dieses Transistors (110) ist.

5. Vorrichtung nach einem der Ansprüche 1 bis 4, **dadurch gekennzeichnet, dass** eine Ladungspumpe einen Spannungspegel generiert, welcher oberhalb der maximalen positiven Versorgungsspannung liegt.

6. Vorrichtung nach einem der Ansprüche 1 bis 5, **dadurch gekennzeichnet, dass** ein Open-Drain-Anschluss (111) der Leistungsverstärker-Ausgangsstufe (100) und ein Open-Source-Anschluss (211) der Eingangsstufe des rauscharmen Verstärkers, LNA, (200) mit demselben Ausgangsanschluss der Schaltung (2) elektrisch verbunden sind und/oder dieselbe Antenne (300) wenigstens ungefähr im selben Punkt (301) kontaktieren.

7. Vorrichtung nach einem der Ansprüche 1 bis 6, **dadurch gekennzeichnet, dass** ein Open-Drain-Anschluss (111) der Leistungsverstärker-Ausgangsstufe (100) und ein Open-Source-Anschluss (211) der Eingangsstufe des rauscharmen Verstärkers, LNA, (200) elektrisch mit denselben zusätzlichen Abstimmelementen (302) verbunden sind, insbesondere mit derselben externen Abstimm-Spule (310).

8. Vorrichtung nach einem der Ansprüche 1 bis 7, **dadurch gekennzeichnet, dass** alle Stufen des Leistungsverstärkers (100) und des rauscharmen Verstärkers, LNA, (200) symmetrisch differentiell sind.

9. Vorrichtung nach Anspruch 8, **dadurch gekennzeichnet, dass** die Differentialausgänge (1110, 1111) der Leistungsverstärker-Ausgangsstufe (100) und der Differentialeingänge (2110, 2111) der Eingangsstufe des rauscharmen Verstärkers, LNA, (200) dieselben differentiellen Schaltungs-Anschlüsse (10, 11) kontaktieren, oder zumindest mit derselben Differential-Antenne (300) elektrisch verbunden sind, insbesondere über geeignete Anschlüsse (301, 302) einer Rahmen-Antenne, die folglich die einzige sowohl Sende- als auch Empfangs-Antenne des Sende-Empfänger-Front-Ends (1) darstellt.

10. Vorrichtung nach Anspruch 9, **dadurch gekennzeichnet, dass** die Differentialausgänge (1110, 1111) der Leistungsverstärker-Ausgangsstufe (100) und die Differentialeingänge (2110, 2111) der Eingangsstufe des rauscharmen Verstärkers (200) elektrisch mit denselben zusätzlichen Abstimmelementen, insbesondere mit denselben externen Abstimmspulen (310, 311) verbunden sind.

## Claims

1. RF-transceiver front-end (1) with implicit direction controll for Time Division Multiple Access Communication especially for a quad-band ISM transceiver in submicron-technology especially in 0,18µm CMOS or BiCMOS technology, the circuitry (1) having
a. a Power Amplifier, PA, (100) output stage comprising a transistor cascode circuitry (110, 120 or 120') containing a cascode-transistor (110), wherein the cascode-transistor (110) in open-drain-configuration is acting as a common-gate-transistor whose gate (112) is controlled by means (130) being also part of the Power Amplifier (100) output stage and changing the gate's voltage potential in order to block or to enable transmitting via the open drain terminal (111; 1110, 1111) and
b. a Low Noise Amplifier, LNA, (200) input stage containing a p-channel metal oxide semiconductor field effect transistor, PMOSFET, (210) preferably an enhancement type transistor in common-gate configuration, gate circuitry, and means (230) for controlling the bulk (214) of the PMOSFET (210) that are suitable for changing the bulk's voltage-potential from a level equal to the source voltage potential to a level above the source voltage potential of the PMOSFET (210) in order to disable receiving via the open source terminal (211; 2110, 2111), wherein the means (230) are suitable to provide in the receiving mode a signal to the bulk (214) corresponding to the positive supply voltage (VDD) of the circuitry (1), or in the broadcasting mode a signal to the bulk (214) which is higher than the positive supply voltage (VDD++) of the circuitry (1), on a single integrated circuit (2).

2. Device according to claim 1 **characterized in that** the drain (213) of the PMOSFET (210) of the Low Noise Amplifier, LNA, (200) input stage is electrically connected to a resistive load (220) and to the input of a second amplifier stage (240) and the gate (212) of the PMOSFET (210) is set to a bias voltage level to enable receiving or this gate (212) is forced to positive supply voltage to pinch off the antenna voltage.

3. Device according to claim 1or 2 **characterized in that** the main transistor (120 or 120') of the cascode circuitry of the Power Amplifier (100) output stage is an n-channel metal oxide semiconductor field effect transistor, NMOSFET, especially an enhancement type or a bipolar junction npn-transistor and, wherein the base respectively the gate of the transistor (120 or 120') is electrically connected to the output (122) of a preamplifier (140).

4. Device according to one of the claims 1-3 **characterized in that** the means (130) for changing the gate's voltage potential of the cascode-transistor (110) applies a voltage potential that is higher than the drain voltage potential of this transistor (110).

5. Device according to one of the claims 1-4 **characterized in that** a charge pump generates a voltage-level whose height is above the maximum positive supply voltage.

6. Device according to one of the claims 1-5 **characterized in that** an open drain terminal (111) of the Power Amplifier (100) output stage and an open source terminal (211) of the Low Noise Amplifier, LNA, (200) input stage are electrically connected to the same port (10) of the circuitry (2) and/or contact electrically the same antenna (300) at least approximately at the same point (301).

7. Device according to one of the claims 1-6 **characterized in that** an open drain terminal (111) of the Power Amplifier (100) output stage and an open source terminal (211) of the Low Noise Amplifier, LNA, (200) input stage are electrically connected to the same additional matching components (302) especially to the same external tuning coil (310).

8. Device according to one of the claims 1-7 **characterized in that** all stages of the Power Amplifier (100) and the Low Noise Amplifier, LNA, (200) are symmetrically differential.

9. Device according to claim 8 **characterized in that** the differential outputs (1110, 1111) of the Power Amplifier (100) output stage and the differential inputs (2110, 2111) of the Low Noise Amplifier, LNA, (200) input stage use the same differential port terminals (10,11) or contact electrically the same differentially driven antenna (300) especially at suitable connections (301, 302) of a loop antenna which hence is the unique transmit- and receive-antenna of the transceiver-front-end.

10. Device according to claim 9 **characterized in that** the differential outputs (1110, 1111) of the Power Amplifier (100) output stage and the differential inputs (2110, 2111) of the Low Noise Amplifier (200) input stage are electrically connected to the same additional matching components 302 especially to the same external tuning coils (310, 311).

## Revendications

1. Dispositif frontal (1) pour des installations d'émission/réception en radiofréquence avec commande directionnelle implicite pour le procédé de multiplexage par répartition dans le temps, de préférence pour les émetteurs-récepteurs en bande Quadband-ISM intégrant la technologie submicronique, en particulier en technologie CMOS 0,18 µm ou BiCMOS, dans lequel le couplage (1) comporte, dans un circuit de commutation intégré individuel (2),
a. un étage de sortie d'un amplificateur de puissance PA (100), lequel intègre un couplage de transistors cascode (110, 120 ou 120'), qui contient un transistor cascode (110),
sachant que le transistor cascode (110) agit en tant que transistor Common Gate dans une configuration Open Drain, dont la gâchette (112) est commandée par des moyens (130) qui sont également des parties de l'étage de sortie de l'amplificateur de puissance (100), et qui modifie le potentiel de gâchette afin de bloquer ou de permettre l'émission via la borne Open Drain (111 ; 1110, 1111),
et
b. un étage d'entrée d'un amplificateur à faible bruit LNA (200), qui contient un transistor à effet de champ à métal-oxyde-semiconducteur à canal P, PMOS-FET, (210), de préférence un transistor à enrichissement en configuration Common Gate, couplage de porte, et des moyens (230) pour commander la borne Bulk (214) du PMOS-FET (210), qui sont appropriés pour modifier le potentiel de masse du niveau de potentiel source à un niveau en-deca du potentiel source du PMOS-FET (210) afin de bloquer la réception via la borne Open Source (211 ; 2110, 2111), sachant que les moyens (230) sont appropriés pour, en mode de réception, livrer un signal à ladite borne Bulk (214), qui correspond à la tension d'alimentation positive (VDD) du couplage (1), ou, en mode d'émission, livrer un signal à ladite borne Bulk (214), qui est supérieur à la tension d'alimentation positive (VDD++) du couplage (1).

2. Dispositif selon la revendication 1, **caractérisé en ce que** le contact d'anode (213) du PMOS-FET (210) de l'étage d'entrée de 'amplificateur à faible bruit LNA (200) est électriquement relié avec une charge ohmique (220) et avec l'entrée d'un second étage d'amplificateur (240), et le contact de porte (212) du PMOS-FET (210) est couplé sur un potentiel de point de fonctionnement afin de permettre une réception, ou la porte (212) est soumise à la tension d'alimentation positive afin de bloquer le signal d'antenne.

3. Dispositif selon la revendication 1 ou 2, **caractérisé en ce que** le transistor principal (120 ou 120') du couplage cascode de l'étage de sortie (100) d'amplificateur de puissance est un transistor à effet de champ à métal-oxyde-semiconducteur à canal N, NMOS-FET, en particulier un transistor à enrichissement ou un transistor à jonction bipolaire NPN, et que la borne Gate ou la borne de base du transistor (120 ou 120') est électriquement reliée avec la sortie (122) d'un préamplificateur (140).

4. Dispositif selon l'une des revendications 1 à 3, **caractérisé en ce que** les moyens (130) pour la modification du potentiel Gate du transistor cascode (110) provoquent un niveau de tension qui est supérieur au potentiel Drain de ce transistor (110).

5. Dispositif selon l'une des revendications 1 à 4, **caractérisé en ce qu'**une pompe de chargement génère un niveau de tension qui est situé au-dessus de la tension d'alimentation maximale.

6. Dispositif selon l'une des revendications 1 à 5, **caractérisé en ce qu'**une borne Open Drain (111) de l'étage de sortie (100) de l'amplificateur de puissance et une borne Open Source (211) de l'étage d'entrée de l'amplificateur à faible bruit LNA (200) sont électriquement reliés avec la même borne de sortie du couplage (2) et/ou contactent la même antenne (300) au moins approximativement au même point (301).

7. Dispositif selon l'une des revendications 1 à 6, **caractérisé en ce qu'**une borne Open Drain (111) de l'étage de sortie (100) de l'amplificateur de puissance et une borne Open Source (211) de l'étage d'entrée de l'amplificateur à faible bruit LNA (200) sont électriquement reliés avec les mêmes éléments d'accord (302) supplémentaires, en particulier, avec la même bobine d'accord (310).

8. Dispositif selon l'une des revendications 1 à 7, **caractérisé en ce que** tous les étages de l'amplificateur de puissance (100) et de l'amplificateur à faible bruit LNA (200) sont symétriquement différentiels.

9. Dispositif selon la revendication 8, **caractérisé en ce que** les sorties différentielles (1110, 1111) de l'étage de sortie (100) de l'amplificateur de puissance et les entrées différentielles (2110, 2111) de l'étage d'entrée de l'amplificateur à faible bruit LNA (200) contactent les mêmes bornes de couplage différentielles (10, 11), ou sont au moins reliées électriquement avec la même antenne différentielle (300), en particulier via des bornes (301, 302) appropriées d'une antenne cadre, qui, par conséquent, représente la seule antenne tant d'émission que de réception du dispositif frontal d'émission-réception (1).

10. Dispositif selon la revendication 9, **caractérisé en ce que** les sorties différentielles (1110, 1111) de l'étage de sortie (100) de l'amplificateur de puissance et les entrées différentielles (2110, 2111) de l'étage d'entrée de l'amplificateur à faible bruit LNA (200) sont électriquement reliées avec les mêmes éléments d'accord (302) supplémentaires, en particulier avec les mêmes bobines d'accord (310, 311) externes.
